# EUROPÄISCHE PATENTSCHRIFT

(11) **EP 1 952 784 B1**
(45) Veröffentlichungstag und Bekanntmachung des Hinweises auf die Patenterteilung: **26.08.2009**
(21) Anmeldenummer: 08000621.6
(22) Anmeldetag: 15.01.2008
(51) Int. Cl.: A61C 19/10

(54) **Verpackung für künstliche Zähne**
Packaging for artificial teeth
Emballage pour dents artificielles

(30) Priorität: 30.01.2007 AT 1502007
(43) Veröffentlichungstag der Anmeldung: 06.08.2008
(73) Patentinhaber: Candulor AG, 8602 Wangen bei Dübendorf (CH)
(72) Erfinder: Hess, Andreas, 73525 Schwäbisch Gmünd (DE); Burchard, Gerd, 73550 Waldstetten (DE); Schnabel, Sebastian, 70327 Stuttgart (DE); Reichert, Reiner, 73527 Täferrot (DE)
(74) Vertreter: Hofmann, Ralf U.

(56) Entgegenhaltungen:
- WO-A-20/06071180
- DE-A- 19 508 761
- DE-U1- 7 932 951
- DE-U1- 20 004 129
- GB-A- 226 794
- GB-A- 190 930 373
- US-A- 5 887 707

## Beschreibung

Die Erfindung bezieht sich auf eine Verpackung für künstliche Zähne mit einem die Zähne aufnehmenden Grundteil und einem auf den Grundteil aufsetzbaren und diesen sowie die eingesetzten Zähne abdeckenden Deckel.

Bei einer bekannten Verpackung für künstliche Zähne (DE102004020509B4) ist eine Zahnleiste vorhanden, welche eine Zahnaufnahme aus Wachs aufweist, an der die künstlichen Zähne angeordnet sind, und ferner ist ein an der Zahnleiste ein Deckel angeordnet, der mit dieser Zahnleiste einen Hohlraum zur Aufnahme der Zähne umschließt. Die Zähne sind daher in einer Ebene liegend zwischen Zahnleiste und Deckel eingespannt, so dass eine natürliche Lagedarstellung mit den künstlichen Zähnen nicht möglich ist.

Ferner ist eine Zahnhalteplatte aus mehreren Zahnplättchen bekannt geworden (EP1243233A1), welche mit einem Trägerkörper oder Wachs oder Klebstoff versehen sind, in welchen die Zähne eindrückbar sind. In einem entsprechenden Rastermaß werden die Zahnplättchen auf einen rechteckigen Grundaufbau aufgesetzt, so dass alle Zähne nebeneinander, jedoch auf ihrer Rückseite liegend aufgereiht sind. Eine durchsichtige Haube deckt die Zähne und den Trägerkörper ab und trägt dann auch noch eine Kodierung. Eine solche Konstruktion benötigt viel Platz und ist außerdem auch hier keine natürlich Lagedarstellung mit den künstlichen Zähnen möglich.

Weiter ist eine Art Schachtel mit einem Unterteil und einem scharnierartig an einer Randbegrenzung eines Unterteiles befestigtem Deckel bekannt geworden (US6,182,820B1), wobei auch hier die Zähne liegend in den Unterteil eingelegt sind. Außerdem ist am Deckel noch eine Schaumstoffeinlage vorgesehen, welche in geschlossener Stellung der Schachtel die eingelegten Zähnte an den Boden des Unterteiles andrückt.

Verpackungen gemäß dem Oberbegriff des Anspruchs 1 sind aus der EP 1 243 233 und DE 10 2004 020509 bekannt.

Die vorliegende Erfindung hat sich zur Aufgabe gestellt, eine Verpackung der eingangs genannten Art zu schaffen, mit der künstliche Zähne in einer natürlichen Lagedarstellung eingesetzt werden können und bei der diese Zähne gut in Ansicht und in Draufsicht ersichtlich sind und vor allem auch vor einem gleich bleibenden Hintergrund ohne Farbverfälschungen vergleichbar sind.

Erfindungsgemäß gelingt dies dadurch, dass die einander zugewendeten Begrenzungen des Grundteiles und des Deckels aufeinander abgestimmt unterschiedlich hoch ausgeführt sind, wobei zumindest ein Großteil der hinteren Begrenzung des Grundteiles höher ausgebildet ist als die gegenüberliegende vordere Begrenzung desselben und durch die höhere hintere Begrenzung des Grundteils eine Rückwand hinter den stehend in die Masse eingesetzten Zöhnen ausgebildet ist.

Durch diese erfindungsgemäßen Maßnahmen kann trotz der immer zueinander passenden Grundteile und Deckel eine Zahnreihe aufrecht stehend eingesetzt werden, wobei durch die höher ausgebildete hintere Begrenzung des Grundteiles die Zähne praktisch vor dieser höheren Begrenzung und annähernd parallel zu dieser frei auskragend eingesetzt werden können. Dabei ist durch die höhere hinaufragende hintere Begrenzung nicht nur eine Art Rückwand für die anzusehenden Zähne geschaffen worden, sondern es ergibt sich dadurch auch ein mechanischer Schutz für die Zähne bei abgenommenem Deckel.

Eine spezielle Ausgestaltung sieht vor, dass die hintere und gegebenenfalls auch die gegenüberliegende vordere Begrenzung des Grundteiles einen konvex bogenförmig verlaufenden Abschluss aufweisen und die entsprechenden Begrenzungen des Deckels dazu korrespondierend eingebuchtet ausgeführt sind. Für den Einsatz der Zähne und für die Lagedarstellung derselben ist dies besonders positiv.

Nach einer anderen Ausgestaltung ist es auch möglich, dass die hintere und gegebenenfalls auch die gegenüberliegende vordere Begrenzung des Grundteiles und des Deckels stufenartig aneinander anschließende verschieden hohe Abschnitte aufweisen. Es sind also diverse konstruktive Ausgestaltungen denkbar, um eine gut sichtbare vordere Seite der Zähne und eine Art Rückwand hinter den Zähnen zu schaffen. Es ist aber trotzdem immer auch an der Rückseite der Zähne ausreichend Platz bis zur entsprechenden Begrenzung vorhanden.

Im Zusammenhang mit den unterschiedlichen Höhen der vorderen und der hinteren Begrenzung ist es auch vorteilhaft, wenn die einander gegenüberliegenden Seitenbegrenzungen des Grundteiles und des Deckels einen schrägen, gegebenenfalls bogenförmig verlaufenden Abschluss in Anpassung an die unterschiedlich hohen hinteren und vorderen Begrenzungen des Grundteiles und des Deckels aufweisen. Es ist dadurch ein guter umfangsgeschlossener Abschluss der Verpackung möglich, was auch für den Transport und die Lagerung von wesentlichem Vorteil ist.

Damit eine entsprechende Sicherung der geschlossenen Verpackung möglich ist, wird vorgeschlagen, dass an den frei auskragenden hinteren und vorderen Begrenzungen und gegebenenfalls auch an den Seitenbegrenzungen des Grundteiles und/oder des Deckels an den Innen- und/oder an den Außenseiten der Begrenzungen vorstehende Stege angeordnet sind zum gegenseitigen formschlüssigen Ineinanderstecken von Grundteil und Deckel. Es ist dadurch eine entsprechende Verschiebesicherheit in horizontaler Richtung gewährleistet.

Eine andere Variante sieht vor, dass die vorstehenden Stege nur abschnittsweise am Umfang der Begrenzungen, vorzugsweise nur in den Eckbereichen am Übergang der hinteren und vorderen Begrenzungen zu den Seitenbegrenzungen vorgesehen sind. Es kann dadurch auch ein einfacheres Aufstecken des Deckels erfolgen.

Weiter ist eine Konstruktion denkbar, bei welcher der Grundteil und der Deckel nach Art einer Nut-Feder-Verbindung ineinander eingreifen. Da die Verpackung in der Regel als Kunststoffteil ausgeführt wird, ist auch eine solche Ausgestaltung einfach herzustellen und auch das Schließen und Öffnen der Verpackung ist einfach zu bewerkstelligen.

Ferner wird vorgeschlagen, dass im Grundteil eine Masse zum Eindrücken von künstlichen Zähnen vorgesehen ist, welche gegebenenfalls in Anpassung an den bogenförmigen oder stufenartigen Abschluss im Mittelbereich bezogen auf die Länge des Grundteiles entsprechend erhöht ausgeführt ist. Damit kann in einfacher Art und Weise die Position der künstlichen Zähne festgelegt werden. Es ist aber auch eine Möglichkeit gegeben, die in der Mitte der Verpackung einzusetzenden Zähne etwas weiter nach oben ragend anzuordnen, so dass also die in einer Verpackung gezeigten Zähne bogenförmig nach oben gewölbt aneinander gereiht sind.

Nach einer besonderen Ausführungsform wird vorgesehen, dass Grundteil und Deckel in einem Horizontalschnitt gesehen im Wesentlichen rechteckig ausgebildet sind. Es ist aber auch denkbar, dass Grundteil und Deckel in einem Horizontalschnitt gesehen im Wesentlichen ellipsenförmig ausgebildet sind. Ferner besteht eine konstruktive Lösung darin, dass Grundteil und Deckel in einem Horizontalschnitt gesehen von in der gleichen Richtung durchgebogenen hinteren und vorderen Begrenzungen sowie dazwischen liegenden, gegebenenfalls ebenen oder bogenförmig verlaufenden Seitenbegrenzungen gebildet ist. Es sind also viele Ausführungsvarianten denkbar, die alle in Richtung einer optimalen Verpackung für künstliche Zähne gehen.

Ferner wird vorgeschlagen, dass zumindest der Deckel aus einem durchsichtigen oder zumindest durchscheinenden Kunststoff gefertigt ist. Es kann dadurch bereits von außerhalb festgestellt werden, welche Zähne und welche Farbtöne von Zähnen in der Verpackung angeordnet sind.

Weitere erfindungsgemäße Merkmale und besondere Vorteile werden in der nachstehenden Beschreibung anhand der Zeichnungen noch näher erläutert. Es zeigen:
Fig.1 einen Grundteil einer erfindungsgemäßen Verpackung mit eingesetzten künstlichen Zähnen;
Fig.2 einen Grundteil in Schrägsicht;
Fig.3 einen Deckel in Schrägsicht;
Fig.4 eine geschlossene Verpackung mit einem Grundteil nach Fig.2 und einem Deckel nach Fig.3;
Fig.5 einen weiteren Grundteil in Schrägsicht;
Fig.6 einen zur Darstellung in Fig.5 passenden Deckel in Schrägsicht;
Fig.7 eine geschlossene Verpackung mit einem Grundteil nach Fig.5 und einem Deckel nach Fig.6;
Fig.8 eine Schrägsicht einer in einem horizontalen Querschnitt rechteckigen Verpackung;
Fig.9 eine Draufsicht auf den Grundteil bei einer Verpackung nach Fig.8;
Fig.10 eine Schrägsicht eines Grundteiles ähnlich der Ausgestaltung nach Fig.5, jedoch in im horizontalem Querschnitt rechteckiger Verpackung;
Fig.11 eine Seitenansicht des Grundteiles nach Fig.10;
Fig.12 eine Schrägsicht einer in einem horizontalen Querschnitt bogenförmigen Verpackung;
Fig.13 eine Draufsicht auf den Grundteil bei einer Verpackung nach Fig.12;
Fig.14 eine Schrägsicht eines Grundteiles bei einer Verpackung nach Fig.12;
Fig.15 eine Seitenansicht des Grundteiles nach Fig.14;
Fig.16 eine Schrägsicht einer in einem horizontalen Querschnitt nierenförmigen Verpackung;
Fig.17 eine Draufsicht auf den Grundteil bei einer Verpackung nach Fig.16;
Fig.18 eine Schrägsicht eines Grundteiles bei einer Verpackung nach Fig.16;
Fig.19 eine Seitenansicht des Grundteiles nach Fig.18;
Fig.20 eine Schrägsicht einer in einem horizontalen Querschnitt nierenförmigen Verpackung, wobei auch noch die Begrenzungen von Grundteil und Deckel bogenförmig verlaufen;
Fig.21 eine Draufsicht auf den Grundteil bei einer Verpackung nach Fig.20;
Fig.22 eine Schrägsicht eines Grundteiles bei einer Verpackung nach Fig.20;
Fig.23 eine Seitenansicht des Grundteiles nach Fig.22;
Fig.24 eine Schrägsicht einer in einem horizontalen Querschnitt ellipsenförmigen Verpackung;
Fig.25 eine Draufsicht auf den Grundteil bei einer Verpackung nach Fig.24;
Fig.26 eine Schrägsicht eines Grundteiles bei einer Verpackung nach Fig.24;
Fig.27 eine Seitenansicht des Grundteiles nach Fig.24.

Bei einer in den Zeichnungen dargestellten Verpackung 1 für künstliche Zähne 2 ist ein die Zähne 2 aufnehmender Grundteil 3 und ein auf den Grundteil 3 aufsetzbarer und diesen sowie die eingesetzten Zähne 2 abdeckender Deckel 4 vorgesehen. Die einander zugewendeten Begrenzungen 5, 6 und 7, 8 des Grundteiles 3 und des Deckels 4 sind aufeinander abgestimmt unterschiedlich hoch ausgeführt. Dabei weist zumindest ein Großteil der hinteren Begrenzung 5 des Grundteiles 3 eine Höhe H1 auf, welche größer ausgebildet ist als die Höhe H2 der gegenüberliegenden vorderen Begrenzung 7 des Grundteiles 3.

Die hintere und gegebenenfalls auch die gegenüberliegende vordere Begrenzung 5 bzw. 7 des Grundteiles 3 weisen einen konvex bogenförmig verlaufenden Abschluss 9, 10 auf und die entsprechenden Begrenzungen 11 des Deckels 4 sind dazu korrespondierend eingebuchtet ausgeführt.

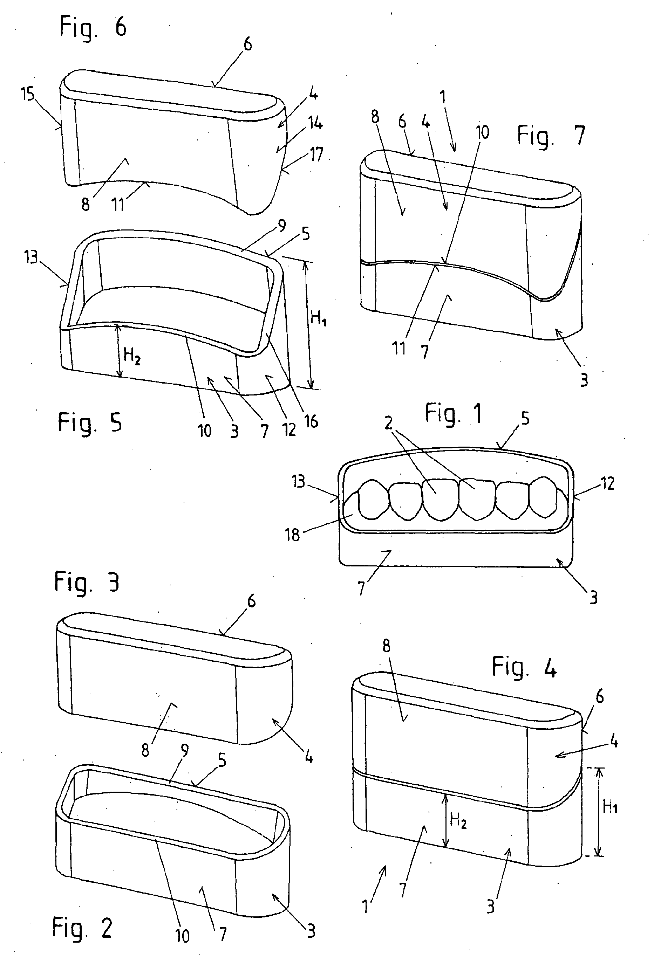

Gemäß einer anderen, nicht dargestellten Ausgestaltung könnte anstelle des konvex bogenförmig verlaufenden Abschlusses auch ein konkav bogenförmig verlaufender Abschluss am Grundteil 3 vorgesehen werden. Auch hier ist dann der untere Abschluss des Deckels 4 entsprechend angepasst. Eine andere Lösung sieht vor, dass die hintere und gegebenenfalls auch die gegenüberliegende vordere Begrenzung 5, 7 des Grundteiles 3 und des Deckels 4 stufenartig aneinander anschließende, verschieden hohe Abschnitte aufweisen. Eine solche Ausgestaltung ist in den Zeichnungen ebenfalls nicht dargestellt. Die oberen Abschlüsse 9,10 der hinteren und der vorderen Begrenzungen 5, 7 können aber auch geradlinig verlaufen, wie dies beispielsweise anhand der Fig.2-4 und 8 ersichtlich ist. Die Abschlüsse am Deckel 4 sind dann natürlich in gleicher Weise angepasst.

Die einander gegenüberliegenden Seitenbegrenzungen 12, 13 und 14, 15 des Grundteiles 3 und des Deckels 4 weisen einen schrägen, gegebenenfalls bogenförmig verlaufenden Abschluss 16, 17 in Anpassung an die unterschiedlich hohen hinteren und vorderen Begrenzungen 5, 7 bzw. 6, 8 des Grundteiles 3 und des Deckels 4 auf.

Damit der Grundteil 3 und der Deckel 4 nach dem Aufsetzen desselben relativ gut miteinander verbunden sind, können an den frei auskragenden hinteren und vorderen Begrenzungen 5, 7 bzw. 6, 8 und gegebenenfalls auch an den Seitenbegrenzungen 12, 13 bzw. 14, 15 des Grundteiles 3 und/oder des Deckels 4 an den Innen- und/oder an den Außenseiten der Begrenzungen vorstehende Stege angeordnet sein zum gegenseitigen formschlüssigen Ineinanderstecken von Grundteil 3 und Deckel 4. Dabei ist es auch möglich, diese vorstehenden Stege nur abschnittsweise am Umfang der Begrenzungen 5, 7 bzw. 6, 8 oder vorzugsweise nur in den Eckbereichen am Übergang der hinteren und vorderen Begrenzungen 5, 7 bzw. 6, 8 zu den Seitenbegrenzungen 12, 13 bzw. 14, 15 vorzusehen.

Eine andere konstruktive Lösung sieht vor, den Grundteil 3 und den Deckel 4 nach Art einer Nut-Feder-Verbindung ineinander eingreifen zu lassen. In konstruktiver Hinsicht ist dies ebenfalls eine einfache Lösung.

Damit die eingesetzten künstlichen Zähne 2 ausreichend fest in der Verpackung 1 gehalten sind und auch ausreichend für die Lagerung und den Transport angeordnet sind, ist im Grundteil 3 eine Masse 18 zum Eindrücken von künstlichen Zähnen 2 vorgesehen, welche gegebenenfalls in Anpassung an den bogenförmigen oder stufenartigen Abschluss im Mittelbereich bezogen auf die Länge des Grundteiles 3 entsprechend erhöht ausgeführt ist.

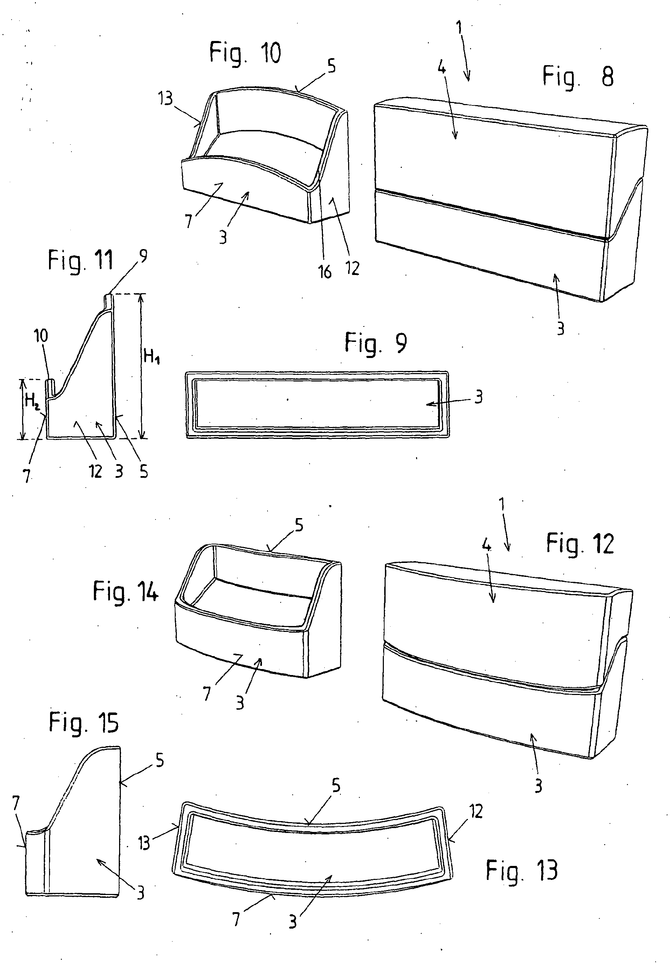

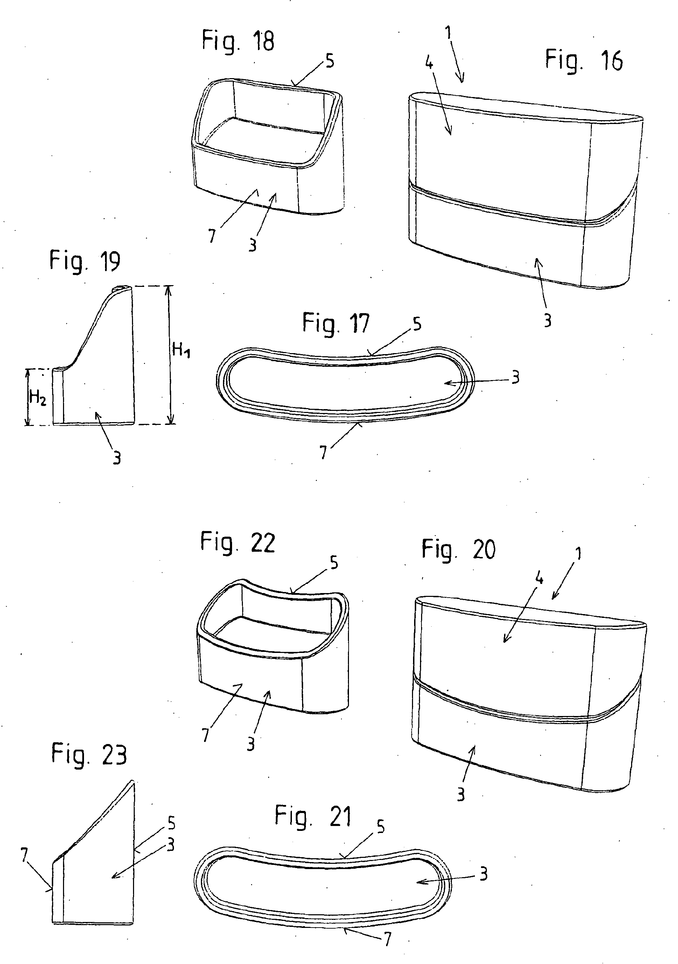

Im Rahmen der Erfindung kann die Verpackung 1 verschiedene Außenkonturen aufweisen, wobei auch auf die einfachere Lagerung und Stapelung Rücksicht genommen werden kann. So ist es denkbar, die Verpackung 1 so wie gemäß den Fig. 1 bis 7 aufgezeigt, mit vorderen und hinteren parallel zueinander liegenden ebenen Flächen und bogenförmig verlaufenden Seitenwänden auszuführen. Es ist aber auch möglich - wie dies in den Fig. 8 bis 11 gezeigt ist - den Grundteil 3 und den Deckel 4 so auszubilden, dass die Verpackung 1 in einem Horizontalschnitt gesehen im Wesentlichen rechteckig ausgeführt ist. Nach der Ausgestaltung gemäß den Fig.12 bis 15 sind parallel zueinander verlaufend gebogene hintere und vordere Begrenzungen 5, 7 und ebene Seitenbegrenzungen 12, 13 bzw. 14, 15 vorgesehen. Hier sind also der Grundteil 3 und der Deckel 4 in einem Horizontalschnitt gesehen von vorzugsweise in der gleichen Richtung durchgebogenen hinteren und vorderen Begrenzungen 5, 7 sowie dazwischen liegenden, gegebenenfalls ebenen oder bogenförmig verlaufenden Seitenbegrenzungen gebildet. Dies gilt also in gleicher Weise auch für die Ausgestaltungen nach den Fig.16 bis 19 sowie den Fig.20 bis 23.

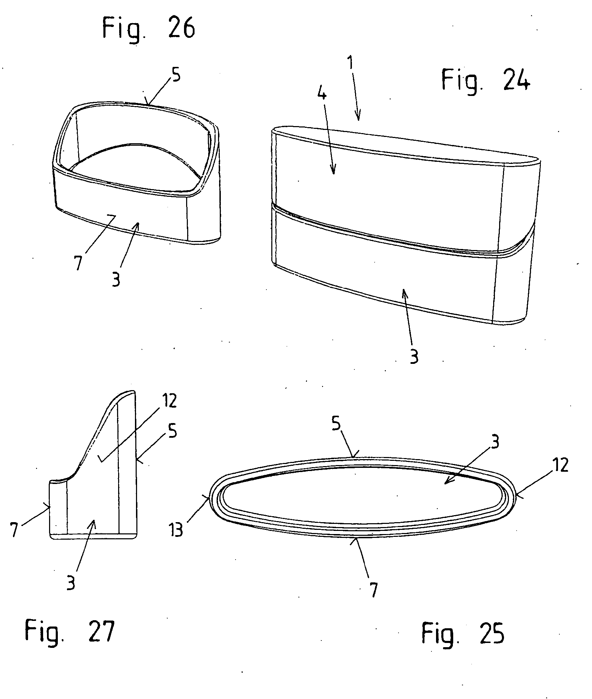

Bei der Ausführung nach den Fig.24 bis 27 ist die Verpackung 1 so ausgeführt, dass Grundteil 3 und Deckel 4 in einem Horizontalschnitt gesehen im Wesentlichen ellipsenförmig ausgebildet sind. Es ist hier ersichtlich, dass doch eine Vielzahl von Möglichkeiten der äußeren Gestalt der Verpackung gewählt werden kann. Wesentlich und wichtig ist dabei aber immer, dass die hintere Begrenzung 5 des Grundteiles 3 höher ausgeführt ist als die vordere Begrenzung 7 des Grundteiles 3. In Anpassung dazu ist dann auch der Deckel 4 entsprechend gestaltet.

Gemäß einer weiteren Ausführungsform kann noch vorgesehen werden, dass zumindest der Deckel 4 aus einem durchsichtigen oder zumindest durchscheinenden Kunststoff gefertigt ist. Es kann dann immer festgestellt werden, ob überhaupt Zähne 2 in der Verpackung 1 gelagert sind und gegebenenfalls auch, welche Art von Zähnen 2 oder in welchen Farbtönen diese gehalten sind.

Die Verpackung 1 und somit der Grundteil 3 und der Deckel 4 werden in der Regel aus einem Kunststoffmaterial gefertigt. Es ist daher auch möglich, die Verpackung 1 oder auch der Grundteil 3 und den Deckel 4 in gleichen oder aber verschiedenen Farbtönen zu gestalten. Ferner kann die Verpackung 1 am Grundteil 3 und/oder am Deckel 4 mit den Daten der eingesetzten Zähne 2 versehen sein. So können auch Etiketten aufgeklebt werden. Solche Etiketten können die Trennlinie zwischen Grundteil 3 und Deckel 4 übergreifend angeordnet werden, um dadurch eine Art Garantieverschluss zu bilden. Die Masse 18 zur Halterung der Zähne 2 im Grundteil 3 kann beispielsweise Gips oder aber ein elastischer Werkstoff sein.

### Legende zu den Hinweisziffern:

- 1: Verpackung
- 2: Zähne
- 3: Grundteil
- 4: Deckel
- 5: hintere Begrenzung (Grundteil)
- 6: hintere Begrenzung (Deckel)
- 7: vordere Begrenzung (Grundteil)
- 8: vordere Begrenzung (Deckel)
- 9: Abschluss
- 10: Abschluss
- 11: Begrenzung (des Deckels)
- 12: Seitenbegrenzung (Grundteil)
- 13: Seitenbegrenzung (Grundteil)
- 14: Seitenbegrenzung (Deckel)
- 15: Seitenbegrenzung (Deckel)
- 16: Abschluss
- 17: Abschluss
- 18: Masse

## Patentansprüche

1. Verpackung mit einer darin angeordneten Reihe von künstlichen Zähnen (2), wobei die Verpackung einen die Zähne (2) aufnehmenden Grundteil (3) und einen auf den Grundteil (3) aufgesetzten und diesen sowie die eingesetzten Zähne (2) abdeckenden Deckel (4) aufweist und im Grundteil (3) eine Masse (18) angeordnet ist, in die die Zähne (2) eingedrückt sind, **dadurch gekennzeichnet, dass** die einander zugewendeten Begrenzungen (5, 6 bzw. 7, 8) des Grundteiles (3) und des Deckels (4) aufeinander abgestimmt unterschiedlich hoch ausgeführt sind, wobei zumindest ein Großteil der hinteren Begrenzung (5) des Grundteiles (3) höher ausgebildet ist als die gegenüberliegende vordere Begrenzung (7) des Grundteils (3) und durch die höhere hintere Begrenzung (5) des Grundteils (3) eine Rückwand hinter den stehend in die Masse (18) eingesetzten Zähnen (2) ausgebildet ist.

2. Verpackung nach Anspruch 1, **dadurch gekennzeichnet, dass** die hintere und gegebenenfalls auch die gegenüberliegende vordere Begrenzung (5, 7) des Grundteiles (3) einen konvex bogenförmig verlaufenden Abschluss (9, 10) aufweisen und die entsprechenden Begrenzungen (6, 8) des Deckels (4) dazu korrespondierend eingebuchtet ausgeführt sind.

3. Verpackung nach Anspruch 1, **dadurch gekennzeichnet, dass** die hintere und gegebenenfalls auch die gegenüberliegende vordere Begrenzung (5, 7) des Grundteiles (3) und des Deckels (4) stufenartig aneinander anschließende verschieden hohe Abschnitte aufweisen.

4. Verpackung nach Anspruch 1 oder 2, **dadurch gekennzeichnet, dass** die einander gegenüberliegenden Seitenbegrenzungen (12, 13 bzw. 14, 15) des Grundteiles (3) und des Deckels (4) einen schrägen, gegebenenfalls bogenförmig verlaufenden Abschluss (16, 17) in Anpassung an die unterschiedlich hohen hinteren und vorderen Begrenzungen (5, 7 bzw. 6, 8) des Grundteiles (3) und des Deckels (4) aufweisen.

5. Verpackung nach einem der Ansprüche 1 bis 4, **dadurch gekennzeichnet, dass** an den frei auskragenden hinteren und vorderen Begrenzungen (5, 7) und gegebenenfalls auch an den Seitenbegrenzungen 12, 13 bzw. 14, 15) des Grundteiles (3) und/oder des Deckels (4) an den Innen- und/oder an den Außenseiten der Begrenzungen (5, 7, 6, 8) vorstehende Stege angeordnet sind zum gegenseitigen formschlüssigen Ineinanderstecken von Grundteil (3) und Deckel (4).

6. Verpackung nach Anspruch 5, **dadurch gekennzeichnet, dass** die vorstehenden Stege nur abschnittsweise am Umfang der Begrenzungen (5, 7, 6, 8), vorzugsweise nur in den Eckbereichen am Übergang der hinteren und vorderen Begrenzungen (5, 6, 7, 8) zu den Seitenbegrenzungen (12, 13, 14, 15) vorgesehen sind.

7. Verpackung nach einem der Ansprüche 1 bis 4, **dadurch gekennzeichnet, dass** der Grundteil (3) und der Deckel (4) nach Art einer Nut-Feder-Verbindung ineinander eingreifen.

8. Verpackung nach den Ansprüchen 2 oder 3, **dadurch gekennzeichnet, dass** die im Grundteil (3) vorgesehene Masse (18) in Anpassung an den bogenförmigen oder stufenartigen Abschluss im Mittelbereich bezogen auf die Länge des Grundteiles (3) entsprechend erhöht ausgeführt ist.

9. Verpackung nach einem der Ansprüche 1 bis 8, **dadurch gekennzeichnet, dass** Grundteil (3) und Deckel (4) in einem Horizontalschnitt gesehen im Wesentlichen rechteckig ausgebildet sind.

10. Verpackung nach einem der Ansprüche 1 bis 8, **dadurch gekennzeichnet, dass** Grundteil (3) und Deckel (4) in einem Horizontalschnitt gesehen im Wesentlichen ellipsenförmig ausgebildet sind.

11. Verpackung nach einem der Ansprüche 1 bis 8, **dadurch gekennzeichnet, dass** Grundteil (3) und Deckel (4) in einem Horizontalschnitt gesehen von in der gleichen Richtung durchgebogenen hinteren und vorderen Begrenzungen (5, 7, 6, 8) sowie dazwischen legenden, gegebenenfalls ebenen oder bogenförmig verlaufenden Seitenbegrenzungen (12, 13, 14, 15) gebildet ist.

12. Verpackung nach den Ansprüchen 1 bis 11, **dadurch gekennzeichnet, dass** zumindest der Deckel (4) aus einem durchsichtigen oder zumindest durchscheinenden Kunststoff gefertigt ist.

13. Verpackung nach einem der Ansprüche 1 bis 12, **dadurch gekennzeichnet, dass** die Zähne (2) vor der höheren hinteren Begrenzung (5) und annähernd parallel zu dieser frei auskragend eingesetzt sind.

14. Verpackung nach einem der Ansprüche 1 bis 13, **dadurch gekennzeichnet, dass** in der Verpackung eine einzelne Reihe von Zähnen (2) angeordnet ist.

## Claims

1. Packaging with a row of false teeth (2) arranged therein, wherein the packaging has a base part (3) which receives the teeth (2) and a cover (4) which is placed on the base part (3) and covers the latter as well as the inserted teeth (2), and a substance (18) is arranged in the base part (3), the teeth (2) being pressed into this substance (18), **characterised in that** the respective facing boundaries (5, 6 and 7, 8) of the base part (3) and the cover (4) differ in height in a complementary manner, at least a majority of the rear boundary (5) of the base part (3) being higher than the opposite front boundary (7) of the base part (3), and the higher rear boundary (5) of the base part (3) forming a rear wall behind the teeth (2) inserted vertically into the substance (18).

2. Packaging according to claim 1, **characterised in that** the rear boundary (5), and optionally also the opposite front boundary (7), of the base part (3) has/have a convexly curved edge (9, 10) and the corresponding boundaries (6, 8) of the cover (4) are indented in a manner corresponding thereto.

3. Packaging according to claim 1, **characterised in that** the rear boundary (5), and optionally also the opposite front boundary (7), of the base part (3) and the cover (4) [sic] has/have portions of differing height which adjoin one another in a step-like manner.

4. Packaging according to claim 1 or 2, **characterised in that** the respective facing lateral boundaries (12, 13 and 14, 15) of the base part (3) and the coyer (4) have an inclined, optionally curved, edge (16, 17) adapted to the respective rear and front boundaries (5, 7 and 6, 8), of differing height, of the base part (3) and the cover (4).

5. Packaging according to any one of claims 1 to 4, **characterised in that** flanges projecting at the interior and/or at the exterior of the boundaries (5, 7, 6, 8) are arranged at the freely salient rear and front boundaries (5, 7) and optionally also at the respective lateral boundaries (12. 13 and 14, 15) of the base part (3) and/or the cover (4) for the reciprocal positive-locking insertion into one another of the base part (3) and the cover (4).

6. Packaging according to claim 5, **characterised in that** the projecting flanges are only provided on portions of the circumference of the boundaries (5, 7, 6, 8), preferably only in the corner regions at the transition from the rear and front boundaries (5, 6, 7, 8) to the lateral boundaries (12, 13, 14, 15).

7. Packaging according to any one of claims 1 to 4, **characterised in that** the base part (3) and the cover (4) engage in one another in the manner of a tongue-and-groove joint.

8. Packaging according to claims 2 or 3, **characterised in that** to match the curved or step-like edge, the substance (18) provided in the base part (3) is raised accordingly in the central region related to the length of the base part (3).

9. Packaging according to any one of claims 1 to 8, **characterised in that** the base part (3) and the cover (4) are substantially rectangular viewed in a horizontal section.

10. Packaging according to any one of claims 1 to 8, **characterised in that** the base part (3) and the cover (4) are substantially elliptical viewed in a horizontal section.

11. Packaging according to any one of claims 1 to 8, **characterised in that** the base part (3) and the cover (4) viewed in a horizontal section are formed by rear and front boundaries (5, 7, 6, 8) bent in the same direction as well as lateral boundaries (12, 13, 14, 15) which lie therebetween and which are optionally plane or curved.

12. Packaging according to claims 1 to 11, **characterised in that** at least the cover (4) is manufactured from a transparent or at least translucent plastics material.

13. Packaging according to any one of claims 1 to 12, **characterised in that** the teeth (2) are inserted in front of the higher rear boundary (5) and approximately parallel thereto, in a freely salient manner.

14. Packaging according to any one of claims 1 to 13, **characterised in that** a single row of teeth (2) is arranged in the packaging.

## Revendications

1. Emballage recevant une rangée de dents artificielles (2),
selon lequel
l'emballage se compose d'un socle (3) recevant les dents (2) et d'un couvercle (4) installé sur le socle (3) dont il couvre les dents (2), une masse (18) étant prévue dans le socle (3) dans laquelle les dents (2) sont plantées,
**caractérisé en ce que**
les limites (5, 6 ou 7, 8) du socle (3) et du couvercle (4), correspondant l'une à l'autre, ont des hauteurs différentes, et
au moins une grande partie de la limite arrière (5) du socle (3) est plus haute que la limite avant (7) opposée du socle (3), et la limite arrière (5) la plus haute du socle (3) constitue une paroi arrière derrière les dents (2) plantées dans la masse (18).

2. Emballage selon la revendication 1,
**caractérisé en ce que**
la limite arrière et le cas échéant également la limite avant (5, 6) du socle (3) ont une terminaison (9, 10) courbée de manière convexe et les limites correspondantes (6, 7) du couvercle (4) ont une forme concave correspondante.

3. Emballage selon la revendication 1,
**caractérisé en ce que**
la limite arrière et le cas échéant la limite avant opposée (5, 7) du socle (3) et du couvercle (4) ont des segments de hauteurs différentes qui se rejoignent par paliers.

4. Emballage selon la revendication 1 ou 2,
**caractérisé en ce que**
les limites latérales (12, 13 ou 14, 15) opposées du socle (3) et du couvercle (4), ont une terminaison (16, 17) inclinée, le cas échéant courbe, dans l'adaptation aux limites arrière et avant de hauteurs différentes (5, 7; 6, 8) du socle (3) et du couvercle (4).

5. Emballage selon les revendications 1 à 4,
**caractérisé en ce que**
des nervures en saillie sont prévues sur les limites arrière et avant librement en saillie (5, 7) et, le cas échéant, également sur les limites latérales (12, 13 et 14, 15) du socle (3) et/ou du couvercle (4) et des côtés intérieurs et/ou extérieurs des limites (5, 7, 6, 8) pour l'engagement réciproque par la forme du socle (3) et du couvercle (4).

6. Emballage selon la revendication 5,
**caractérisé en ce que**
les nervures en saillie ne sont prévues que par segments à la périphérie des limites (5, 7, 6, 8) de préférence seulement dans les zones de coin à la jonction entre les limites arrière et avant (5, 6, 7, 8) et des limites latérales (12, 13, 14, 15).

7. Emballage selon les revendications 1 à 4,
**caractérisé en ce que**
le socle (3) et le couvercle (4) pénètrent l'un dans l'autre à la manière d'une liaison à rainures et nervures.

8. Emballage selon les revendications 2 ou 3,
**caractérisé en ce que**
la masse (18) prévue dans le socle (3) est relevée pour s'adapter à la terminaison courbe ou par paliers de la zone centrale rapportée à la longueur du socle (3).

9. Emballage selon les revendications 1 à 8,
**caractérisé en ce que**
le socle (3) et le couvercle (4) sont réalisés selon une forme pratiquement rectangulaire en coupe horizontale.

10. Emballage selon les revendications 1 à 8,
**caractérisé en ce que**
en coupe horizontale, le socle (3) et le couvercle (4) sont pratiquement de forme elliptique.

11. Emballage selon les revendications 1 à 8,
**caractérisé en ce que**
le socle (3) et le couvercle (4) en coupe horizontale sont formés par des limites (5, 7, 6, 8) arrière et avant courbées dans la même direction, et dans l'intervalle, par des parois latérales (12, 13, 14, 15), le cas échéant planes ou courbes.

12. Emballage selon les revendications 1 à 11,
**caractérisé en ce qu'**
au moins le couvercle (4) est fabriqué en une matière plastique transparente ou au moins translucide.

13. Emballage selon les revendications 1 à 12,
**caractérisé en ce que**
les dents (2) sont plantées en porte-à-faux devant la limite arrière haute (5) et pratiquement parallèlement à celle-ci.

14. Emballage selon les revendications 1 à 13,
**caractérisé en ce que**
l'emballage ne comporte qu'une seule rangée de dents (2).
